# EUROPEAN PATENT SPECIFICATION

(11) **EP 2 477 372 B1**
(45) Date of publication and mention of the grant of the patent: **25.04.2018**
(21) Application number: 10816682.8
(22) Date of filing: 13.09.2010
(51) Int. Cl.: H04L 29/06, H04L 29/12

(54) **METHOD AND SYSTEM FOR OBTAINING TERMINAL IDENTIFIER**
VERFAHREN UND SYSTEM ZUR GEWINNUNG VON ENDGERÄTIDENTIFIKATOREN
PROCÉDÉ ET SYSTÈME POUR OBTENIR UN IDENTIFIANT DE TERMINAL

(30) Priority: 17.09.2009 CN 200910171975; 17.10.2009 CN 200910174828
(43) Date of publication of application: 18.07.2012
(73) Proprietor: ZTE Corporation, Shenzhen, Guangdong 518057 (CN)
(72) Inventor: BI, Yifeng, Shenzhen Guangdong 518057 (CN); WU, Qiang, Shenzhen Guangdong 518057 (CN); WANG, Zhihai, Shenzhen Guangdong 518057 (CN)
(74) Representative: Manitz Finsterwald Patentanwälte PartmbB
(86) International application number: PCT/CN2010/076846
(87) International publication number: WO 2011/032478

(56) References cited:
- CN-A- 1 659 905
- CN-A- 1 816 055
- CN-A- 101 141 783
- BARISCH M ET AL: "Integrating user Identity Management systems with the Host Identity Protocol", COMPUTERS AND COMMUNICATIONS, 2009. ISCC 2009. IEEE SYMPOSIUM ON, IEEE, PISCATAWAY, NJ, USA, 5 July 2009 (2009-07-05), pages 830-836, XP031510496, ISBN: 978-1-4244-4672-8
- KORHONEN EXTENSIONS (DIME) TELIASONERA H TSCHOFENIG NOKIA SIEMENS NETWORKS J BOURNELLE ORANGE LABS G GIARETTA QUALCOMM M NAKHJIRI: "Diameter Mobile IPv6: Support for Home Agent to Diameter Server Interaction; draft-ietf-dime-mip6-split-12.txt", DIAMETER MOBILE IPV6: SUPPORT FOR HOME AGENT TO DIAMETER SERVER INTERACTION; DRAFT-IETF-DIME-MIP6-SPLIT-12.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. dime, no. 12, 23 September 2008 (2008-09-23), XP015058089,
- PATEL K LEUNG CISCO SYSTEMS M KHALIL H AKHTAR NORTEL NETWORKS K CHOWDHURY STARENT NETWORKS A: "Mobile Node Identifier Option for Mobile IPv6 (MIPv6); rfc4283.txt", 20051101, 1 November 2005 (2005-11-01), XP015043212, ISSN: 0000-0003
- "General requirements for ID/locator separation in NGN; Y.2015 (01/09)", ITU-T STANDARD, INTERNATIONAL TELECOMMUNICATION UNION, GENEVA ; CH, no. Y.2015 (01/09), 23 January 2009 (2009-01-23), pages 1-24, XP017466982, [retrieved on 2009-09-18]
- MIN-KYO IN ET AL: "Splitting mechanism for IP into Identifier and Locator in NGN", TOWARD NETWORK INNOVATION BEYOND EVOLUTION : THE 9TH INTERNATIONAL CONFERENCE ON ADVANCED COMMUNICATION TECHNOLOGY ; ICACT 2007 ; PHOENIX PARK, KOREA, FEB. 12 - 14, 2007 ; PROCEEDINGS, IEEE TECHNICAL ACTIVITIES, PISCATAWAY, NJ, USA, 1 February 2007 (2007-02-01), pages 1974-1977, XP031085134, ISBN: 978-89-5519-131-8
- XU HUAWEI X: "Routing Architecture for the Next Generation Internet (RANGI); draft-xu-rangi-01.txt", ROUTING ARCHITECTURE FOR THE NEXT GENERATION INTERNET (RANGI); DRAFT-XU-RANGI-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 1, 13 July 2009 (2009-07-13), XP015063554, [retrieved on 2009-07-13]
- FARINACCI V FULLER D MEYER D LEWIS CISCO SYSTEMS D: "Locator/ID Separation Protocol (LISP); draft-farinacci-lisp-12.txt", LOCATOR/ID SEPARATION PROTOCOL (LISP); DRAFT-FARINACCI-LISP-12.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 12, 2 March 2009 (2009-03-02), XP015060559,
- Julien Boumelle ET AL: "Bootstrapping Mobile IPv6 using EAP Authentication Authorization Accounting Attribute Value Pair Access Service Authorizer Access Service Provider Binding Acknowledgement Binding Update Care-of Address Correspondent Node Extensible Authentication Protocol Home Agent Home Address Intemet Key Exchange", , 1 January 2005 (2005-01-01), XP055279426, Retrieved from the Internet: URL:http://ieeexplore.ieee.org/ielx5/10896 /34295/01635644.pdf?tp=&arnumber=1635644&i snumber=34295 [retrieved on 2016-06-09]
- TU RUI ET AL: "Network Access Control Mechanism Based on Locator/Identifier Split", NETWORKING, ARCHITECTURE, AND STORAGE, 2009. NAS 2009. IEEE INTERNATIONAL CONFERENCE ON, IEEE, PISCATAWAY, NJ, USA, 9 July 2009 (2009-07-09), pages 171-174, XP031505400, ISBN: 978-0-7695-3741-2

## Description

### Technical Field

The present invention relates to the communication field, and especially, to a method and system for acquiring the identity identifier of a terminal, and a terminal.

### Background of the Related Art

In the existing communication network, when the terminal acquires an IP (Internet Protocol) address, the IP address becomes the location identifier, i.e. identity identifier, of the terminal on the routing level. When the user sends or receives a data packet, the sending or receiving of the data packet is achieved through the IP address allocated by the network side. If the terminal moves (movement of a network element across the allocated addresses), the problem of IP address changing will occur, then a mobile IP solution is introduced into the LTE (Long Term Evolution) or eHRPD (evolved High Rate Packet Data) network; however, the mobile IP solution fails to completely solve the problem of IP address changing due to the movement of the terminal.

As to the above problem, applying the idea of separating the location from identity to the LTE network or eHRPD network or other packet domain networks would be an effective solution.

In the existing LTE network, the user identifies his unique identity via an IMSI (International Mobile Subscriber Identity) identifier, in the eHRPD network of 3GPP2, the unique identity of the user is identified via an NAI (network access identifier), and in other packet domain networks, there are also other unique identifiers for identitying the identity of the user. If these conventional user identity identifiers (IMSI or NAI, etc.) in the existing networks are directly used to achieve the separation of identity from location, it will make considerable change to the terminal, affect the protocol stack structure of the terminal, and cannot be compatible with the conventional terminal.

How to apply the idea of separating location from identity into the packet domain network under the premise of making the least change to the terminal is a problem urgent to be solved.

The features of the preamble of the independent claims are known from FARINACCI V FULLER D MEYER D LEWIS CISCO SYSTEM D: "Locator/ID Separation Protocol (LISP)", draft-farinacci-lisp-12.txt, INTERNET SOCIETY (ISOC) 4, RUE no. 12, 2 March 2009, XP015060559. Related technologies are also known from CN 101 141 783 A and document "Integrating user Identity Management systems with the Host Identity Protocol" of BARISCH M ET AL, COMPUTERS AND COMMUNICATIONS, 5 July 2009, ISCC 2009, IEEE, PISCATAWAY, NJ, USA, XP031510496. The features of the preamble of the independent claims are also known from "Network Access Control Mechanism based on Locator/Identifier Split"Tu et al. IEEE 2009.

Document "Bootstrapping Mobile IPv6 using EAP", Bournelle et al. IEEE 2005 discloses obtaining a home address based on a NAI.

### Summary of the Invention

The invention is defined by the subject-matter of the independent claims.

### Brief Description of Drawings

Figs. 1(a) to 1(c) are schematic diagrams of a network topology based on separated location and identity according to the present invention;
Fig. 2 is a schematic flowchart of a method for a terminal to acquire an AID according to an example of the present invention;
Fig. 3 is a flowchart of a method for acquiring the conventional user identity identifier of a terminal from an authentication request and allocating an AID to the terminal according thereto according to an example of the present invention;
Fig. 4 is a flowchart of the method in the first application example according to the present invention;
Fig. 5 is a flowchart of the method of the second application example according to the present invention;
Fig. 6 is a flowchart of the method of the third application example according to the present invention;
Fig. 7 is a flowchart of the method of the fourth application example according to the present invention;
Fig. 8 is a flowchart of the method of the fifth application example according to the present invention; and
Fig. 9 is a flowchart of the method of the sixth application example according to the present invention.

### Preferred Embodiments of the Present Invention

Hereinafter, the technical solution of the present invention will be described in detail in conjunction with the accompanying drawings and embodiments.

There are two types of identifiers in a communication system having a network architecture with separated identity identifier and location: access identifier (AID) and routing identifier (RID). Among them, an AID is a user identity identifier of the terminal, and the network allocates a unique AID to each terminal user which keeps unchanged during the movement of the terminal; and an RID is a location identifier allocated by the network to the terminal and used in the backbone network. Identity identifier and location identifier can have different names in different network architectures.

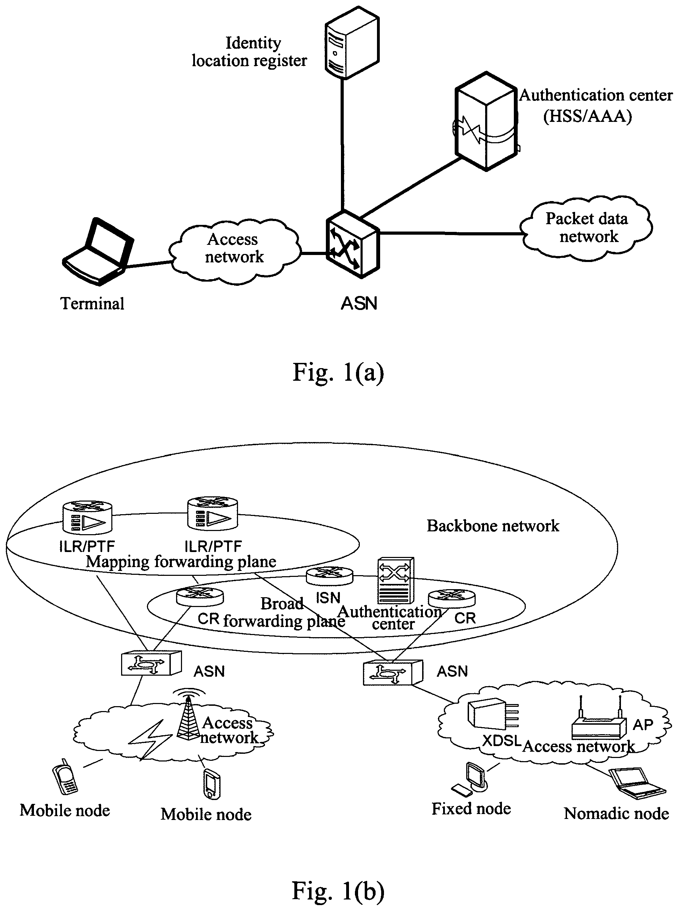

Fig. 1(a) shows a part of the topology of a network architecture with separated location and identity, including an access network, an access node (in the figure, the access node is an ASN (access service node)), a packet data network, an authentication center and an identity location register.

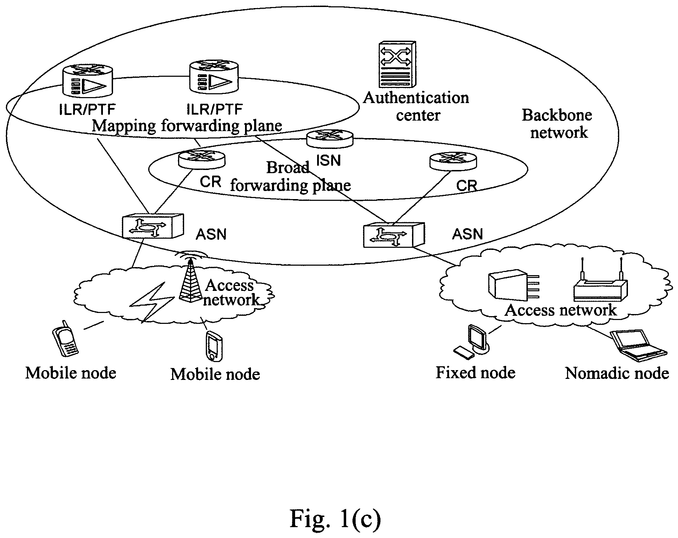

As shown in Figs. 1(b) and 1(c), under the network architecture with separated location and identity, the network is divided into an access network and a backbone network, with the access network being located at the edge of the backbone network and responsible for the access of the terminal in its own network. The backbone network is responsible for the routing and forwarding of the data messages of the terminal which accesses via the access network. ASN is located at the demarcation point between the backbone network and access network and interfaced with the access network and backbone network. The access network and backbone network have no overlap regarding topology relationship.

In this case, in a network architecture based on separated identity identifier and location, a unique AID is allocated to each user terminal and used in the access network and keeps unchanged during the movement of the terminal; and an RID is a location identifier allocated to the terminal and used in the backbone network.

The backbone network is divided into a mapping forwarding plane and a broad forwarding plane, wherein the broad forwarding plane is mainly used for routing and forwarding a data message whose destination address is the RID according to the RIDs therein, and the data routing and forwarding in the broad forwarding plane are consistent with those of the conventional IP network (Legacy IP network). The main network elements of the broad forwarding plane include a CR (Common Router) and an ISN (Interconnect Service Node). The mapping forwarding plane is mainly used for storing the mapping information about the identity and location of the terminal (i.e. AID-RID mapping information), processing the registration and query of the location of the terminal, and routing and forwarding a data message whose destination address is the AID. The main network elements of the mapping forwarding plane include an ILR/PTF (Identity Location Register/Packet Transfer Function).

In Fig. 1(b), ASN is independent from the backbone network in the division of architecture. In Fig. 1(c), the backbone network includes an ASN. The mere difference between Figs. 1(b) and 1(c) is architecture division, and the function actually completed by ASN is the same.

Referring to Figs. 1(a) to 1(c), wherein:
the access network provides a two-layer (physical layer and link layer) access service for the user terminal, which can be cellular mobile network, DSL (Digital Subscriber Line), wideband optical fiber access network or WiFi (Wireless Fidelity) access network, etc. The packet data network can be an IP network.

Terminal: in a network-based architecture with separated identity identifier and location, the accessing user terminal can be one or more of a mobile node, a fixed node, a nomadic node.

Access node: it is a boundary node connecting a wireless access network to a packet data network, and responsible for the access of the terminal to the packet data network, and in order to achieve the separation of identity identifier from location of the terminal, the access node also allocates an RID to the terminal, maintains the AID-RID mapping information about the terminal, registers and queries the RID of the terminal in an ILR (Identity Location Register), achieves the routing and forwarding of data messages between the wireless access network and the packet data network and between access nodes, and achieves the handover of the terminal by coordinating with other access nodes and so on. The access node is also responsible for, on behalf of an IPV4/IPV6 terminal, achieving the compatibility processing of the AID data messages and IPV4/IPV6 data messages in a network-based architecture with separated location and identity. In the embodiments of the present invention, the access node is an ASN.

CR (Common Router): it routes and forwards a data message with the source address/destination address thereof being in the format of RID. The function of such a common router is the same as that of the router in the related art.

Authentication center: it is responsible for recording the user attributes in the architecture network with separated identity identifier and location, including information such as user type, authentication information, user service level, etc., generating user security information for authentication, integrity protection and encryption, and carrying out legality certification and authorization to the user when the user accesses. The authentication center supports bidirectional authentication between the architecture network with separated identity identifier and location and the user.

ILR/PTF (Identity Location Register/Packet Transfer Function): ILR and PTF can be two function modules of the same entity and located in the mapping forwarding plane of the backbone network. An ILR maintains/stores the AID-RID mapping relationship of the user in the network-based architecture with separated identity identifier and location, achieves the registration function, and processes the location query procedure of the communicating opposite end; after receiving the data message sent by the ASN, the PTF routes and forwards the data message according to the destination AID. After searching out the destination AID-RID mapping relationship, the PTF node in the mapping forwarding plane encapsulates the RID information in the header of the data message and forwards the same to the broad forwarding plane and routes the same to the communicating opposite end.

ISN (Interconnect Service Node): it is used for inquiring about and maintaining the AID-RID mapping information about the network terminal in the present architecture, encapsulating, routing and forwarding the data message between the present architecture network and the conventional IP (Legacy IP) network, and achieving the interaction and intercommunication function between the present architecture network and the Legacy IP network. When a handover occurs in the mobile terminal under the present architecture, the ISN is used as a proxy anchor point between the present architecture network and the Legacy IP.

In different network architectures with separated location and identity, the above node may have different names, for example, the access node can also be referred to as an access router or an access server, and it is equivalent to an integrity of a tunnel ingress router and a tunnel egress router in the LISP (Locator/ID Separation Protocol) architecture. The identity location register can also be referred to as a mapping server, etc.

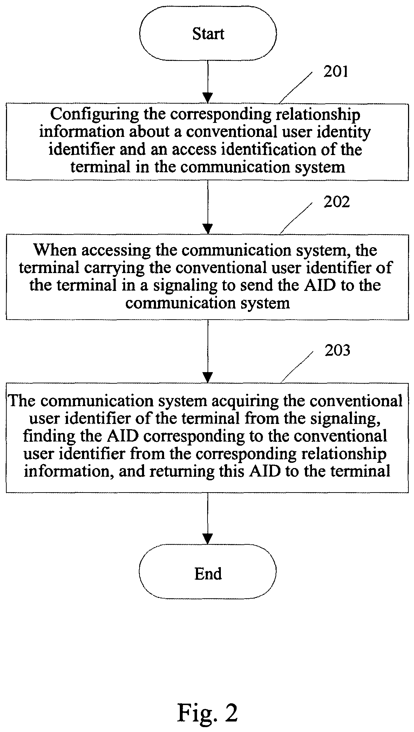

In order to achieve the separation of location from identity identifier of the terminal in the packet domain network under the premise of making the least change to the terminal or not affecting the terminal, the present invention proposes a method for a terminal to acquire an AID, which is applied a communication system having a network architecture with separated identity identifier and location. Referring to Fig. 2, the method includes the following steps.

In step 201, corresponding relationship information about a conventional user identity identifier and an access identifier (AID) of the terminal is configured in the communication system, with the AID being a unique identifier allocated to a terminal user by the communication system and also being referred to as an identity identifier;
in the existing communication network, the terminal user uses a conventional identity identifier to identify the unique identity of the terminal user, and the conventional identity identifiers of the terminal in different packet domain networks are different, for example, in the existing LTE network, the conventional identity identifier of the terminal is an IMSI (international mobile subscriber identity), the conventional identity identifier of the terminal in an eHRPD network is a NAI (Network Access Identifier), and the conventional identity identifiers of the terminal in other packet domain networks are other identifiers for uniquely identifying the identity of the terminal user.

In step 202, when accessing the communication system, the terminal carries the conventional user identity identifier of the terminal in a signaling sent to the communication system.

In step 203, the communication system acquires the conventional user identity identifier of the terminal from the signaling, finds the corresponding AID of the conventional user identity identifier from the corresponding relationship information, and returns this AID to the terminal.

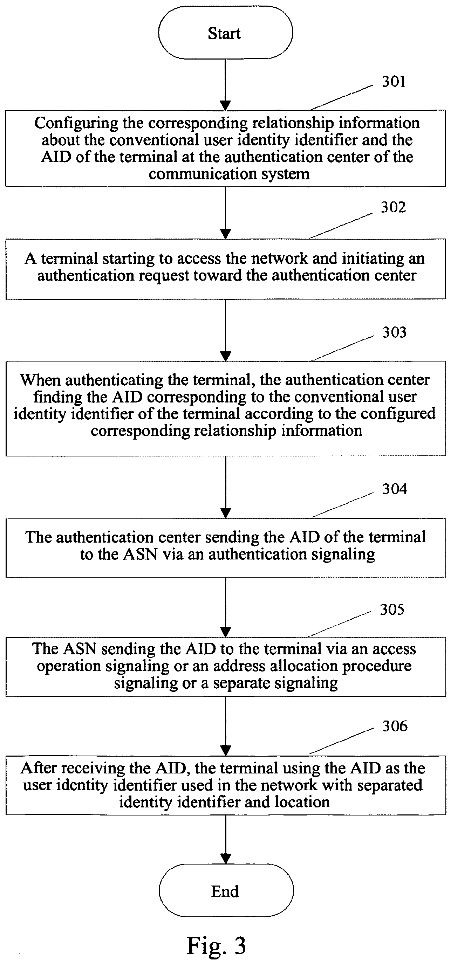

When the terminal accesses a communication system, it will initiate an authentication request to the communication system, with the authentication request carrying the conventional user identity identifier of the terminal, therefore, when particularly performing the above step 202, the communication system can acquire the conventional user identity identifier of the terminal from the authentication request. Based on this, the present invention proposes a method procedure for acquiring the conventional user identity identifier of a terminal from an authentication request and on this basis allocating an AID to the terminal. Referring to Fig. 3, the method procedure includes the following steps.

In step 301, the corresponding relationship information about the conventional user identity identifier of the terminal and the access identifier (AID) is configured in the authentication center of the communication system (HSS/AAA, Home Subscriber Server/Authentication Authorization Accounting), with the AID being the unique identifier allocated by the communication system to the terminal user;
in step 302, a terminal starts to access the network and initiates an authentication request toward the authentication center;
in step 303, when authenticating the terminal, the authentication center finds the corresponding AID of the conventional user identity identifier of the terminal according to the configured corresponding relationship information;
in step 304, the authentication center sends the AID of this terminal to the ASN via an authentication signaling;
in step 305, the ASN sends this AID to this terminal via an access operation signaling or an address allocation procedure signaling; and
in step 306, after receiving this AID, this terminal uses this AID as its user identity identifier used in the network with separated identity identifier and location.

This terminal using this AID as its user identity identifier used in the network with separated identity identifier and location includes this terminal using this AID as the source address to send a data message.

In the present invention, the above technical solution is described in detail by taking the particular application in the communication system implemented on the basis of a long term evolution (LTE) network and the particular application of the communication system implemented on the basis of a high rate packet data (eHRPD) network as example respectively, and detailed reference can be made to the first application example to the fourth application example, wherein in the LTE network, the terminal is referred to as a UE (user equipment), the ASN may include an MME (Mobile Management Entity) and a S-GW (Serving Gateway), and the authentication center is an HSS or an AAA; and in the eHRPD network, the terminal is referred to as a UE, the ASN can include an HSGW (High Rate Packet Data Serving Gateway), and the authentication center is an HSS or an AAA.

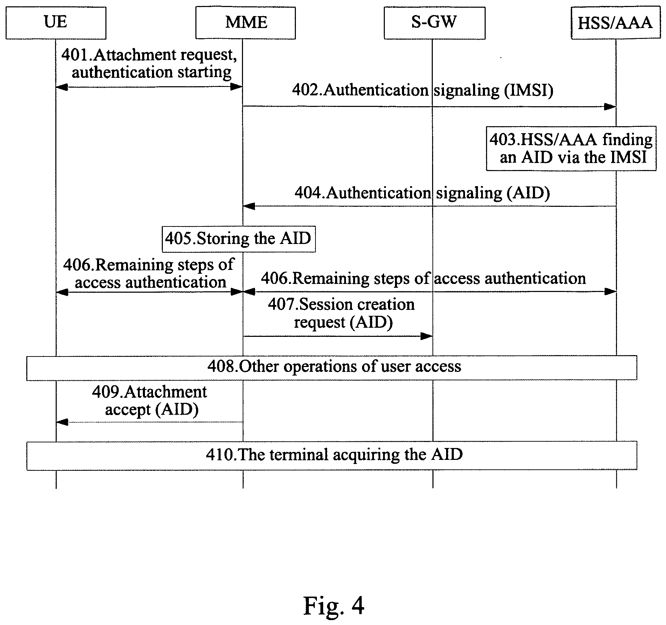

The first application example:
in this application example, a communication system having a network architecture with separated identity identifier and location is implemented on the basis of a long term evolution (LTE) network. The communication system configures the corresponding relationship information about the conventional user identity identifier of the terminal and the access identifier (AID) in the authentication center (HSS/AAA), with the AID being the unique identifier allocated to the terminal user by the communication system, and the conventional user identity identifier of the terminal referring to the international mobile subscriber identity (IMSI) of the terminal. In this application example, the method for acquiring the user identity identifier of the terminal, referring to Fig. 4, includes the following steps.

In step 401, the UE initiates an attachment and sends a signaling relevant to the authentication operation toward the MME;
in step 402, the MME sends an authentication signaling to the HSS/AAA, wherein the authentication signaling carries the conventional user identity identifier IMSI of the UE;
in step 403, after receiving the authentication signaling, the HSS/AAA parses the conventional user identity identifier IMSI of the UE from this authentication signaling and finds the corresponding AID of the conventional user identity identifier IMSI of the UE according to the configured corresponding relationship information about the conventional user identity identifier IMSI and the AID;
in step 404, the HSS/AAA carries the searched AID of the UE in the authentication signaling to send the AID to the MME;
in step 405, after receiving the authentication signaling carrying the AID of the UE, the MME parse the AID of the UE and stores the AID;
in step 406, the UE, MME and HSS/AAA complete the remaining steps of the authentication operation;
in step 407, the MME carries the AID of the UE in a "session creation request" to send the AID to the S-GW;
after receiving the AID of the UE, the S-GW carries out data packet processing according to this AID.

In step 408, various network elements interact to achieve other operations of user access, including default bearer creation, etc.;
in step 409: the MME carries the AID of the UE in an "attachment accept" signaling to send the AID to the UE and notifies the UE that the attachment is completed;
in Step 410, after receiving this "attachment accept" signaling, the UE parses the AID of the UE therefrom and sends a data message taking this AID as the source address.

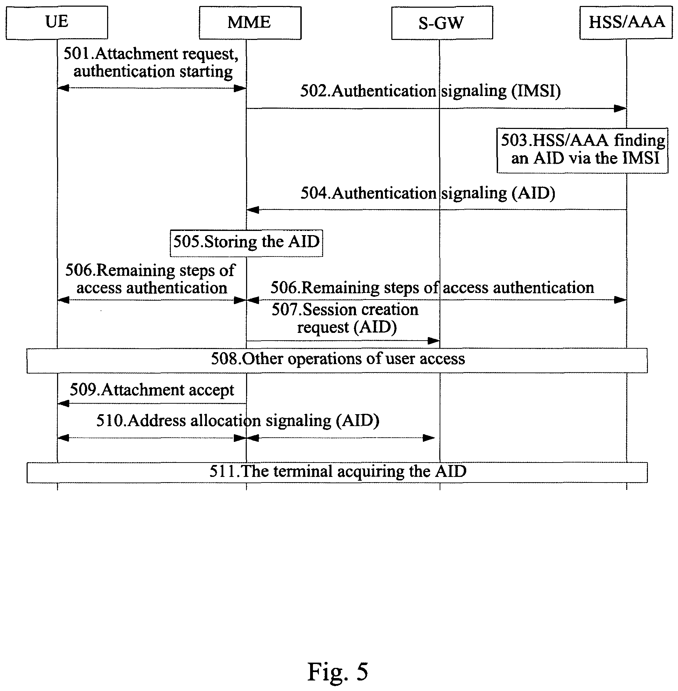

**The second application example:**
in this application example, a communication system having a network architecture with separated identity identifier and location is implemented on the basis of a long term evolution (LTE) network. The communication system configures the corresponding relationship information about the conventional user identity identifier of the terminal and the access identifier (AID) in the authentication center (HSS/AAA), with the AID being the unique identifier allocated to the terminal user by the communication system, and the conventional user identity identifier of the terminal referring to the international mobile subscriber identity (IMSI) of the terminal. In this application example, the method for acquiring the user identity identifier of the terminal, referring to Fig. 5, includes the following steps.

Steps 501-508 are the same with steps 401-408;
In step 509, the MME sends an "attachment accept" signaling to the UE and notifies the UE that the attachment is completed;
In step 510, the MME, S-GW or other network element carries the AID to the UE via an address allocation operation signaling (such as DHCP (Dynamic Host Configuration Protocol)) or other signaling; and
in step 511: after receiving the signaling carrying the AID sent from the MME, S-GW or other network element, the UE parses the AID thereform and sends data messages by taking this AID as the source address.

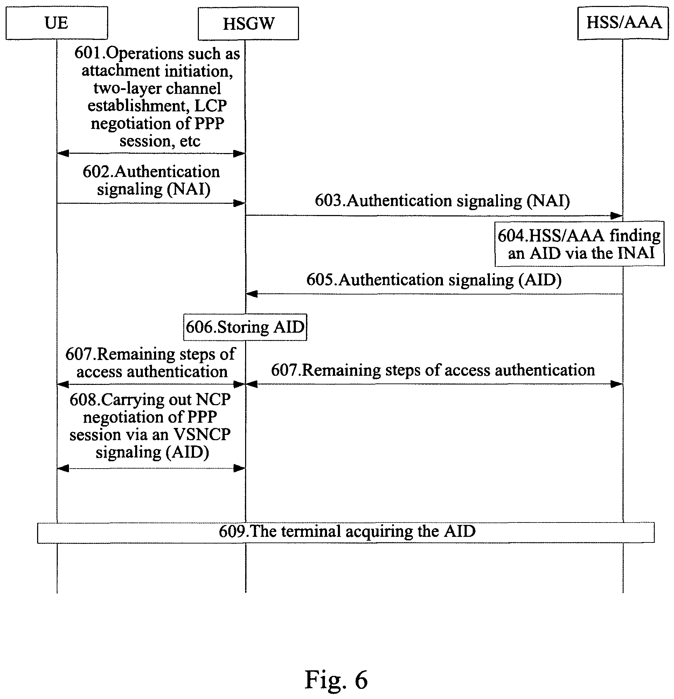

**The third application example:**
in this application example, a communication system having a network architecture with separated identity identifier and location is implemented on the basis of an evolved high rate packet data network (eHRPD) network. The communication system configures the corresponding relationship information about the conventional user identity identifier of the terminal and the access identifier (AID) in the authentication center (HSS/AAA), with the AID being the unique identifier allocated to the terminal user by the communication system, and the conventional user identity identifier of the terminal referring to the network access identifier (NAI) of the terminal. In this application example, the method for acquiring the user identity identifier of the terminal, referring to Fig. 6, includes the following steps.

In step 601, the UE initiates attachment and performs relevant operations (such operations as two-layer channel establishment, PPP (Point To Point Protocol) session LCP (Link Control Protocol) negotiation, etc.);
In step 602, the UE sends a signaling relevant to the authentication operation toward the HSGW;
in step 603, the HSGW sends an authentication signaling to the HSS/AAA, wherein the authentication signaling carries the conventional user identity identifier NAI of the UE;
in step 604, after receiving the authentication signaling, the HSS/AAA parses the conventional user identity identifier (NAI) of the UE from this authentication signaling and finds the corresponding AID of the conventional user identity identifier NAI of the UE according to the configured corresponding relationship information about the conventional user identity identifier NAI and the AID;
in step 605, the HSS/AAA carries the searched AID of the UE in the authentication signaling to send the AID to the HSGW;
in step 606, after receiving the authentication signaling carrying the AID of the UE, the HSGW parse the AID of the UE and stores the AID;
in step 607, the UE, HSGW and HSS/AAA complete the remaining steps of the authentication operation;
in step 608, the UE and HSGW intercommunicate with an VSNCP (Vendor-Specific Network Control Protocol) signaling, and complete the NCP (Network Control Protocol) stage negotiation of the PPP (Point To Point Protocol) session, and in this operation the HSGW carries this AID in the VSNCP signaling to send the AID to the UE; and
in step 609, after receiving the VSNCP signaling carrying the AID, the UE parses the AID therefrom and sends a data message taking this AID as the source address.

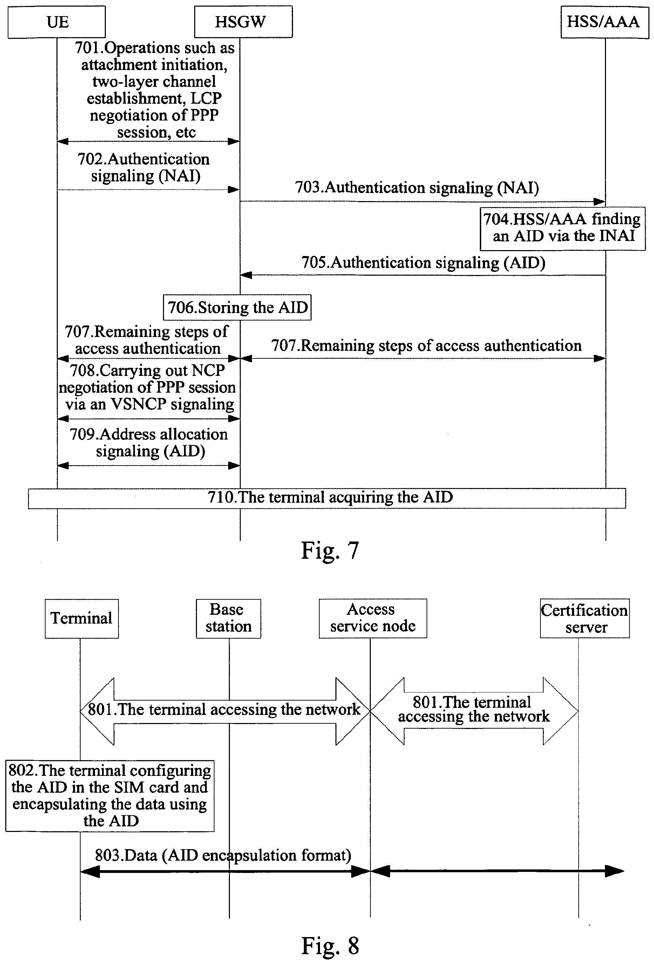

**The fourth application example:**
in this application example, a communication system having a network architecture with separated identity identifier and location is implemented on the basis of an evolved high rate packet data network (eHRPD) network. The communication system configures the corresponding relationship information about the conventional user identity identifier of the terminal and the access identifier (AID) in the authentication center (HSS/AAA), with the AID being the unique identifier allocated to the terminal user by the communication system, and the conventional user identity identifier of the terminal referring to the network access identifier (NAI) of the terminal. In this application example, the method for acquiring the user identity identifier of the terminal, referring to Fig. 7, includes the following steps.

Steps 701-707 are the same with steps 601-607;
In step 708, the UE and HSGW intercommunicate with a VSNCP signaling to complete the NCP stage negotiation of a PPP session;
in step 709, the HSGW or other network element carries the AID to the UE via an address allocation operation signaling (such as DHCP signaling) or other signaling; and
in step 710, after receiving the signaling carrying the AID, the UE parses the AID therefrom and sends a data message taking this AID as the source address.

The above solutions of the present invention all employ the manner of configuring the corresponding relationship information about the conventional user identity identifier and AID of the terminal at the network side.

In order to implement the above network side implementation solution, the present invention also proposes an apparatus for acquiring the identity identifier of a terminal applied in a communication system having a network architecture with separated identity identifier and location, comprising a configuring module and a processing module, wherein:
the configuring module is configured to configure the corresponding relationship information about a conventional user identity identifier and an access identifier (AID) of the terminal in the communication system, with the AID being a unique identifier allocated to a terminal user by the communication system;
the processing module is configured to: when the terminal accesses the communication system, acquire the conventional user identity identifier of the terminal from a signaling sent by the terminal to the communication system, then finding the corresponding AID of the conventional user identity identifier from the corresponding relationship information in the configuring module, and return the AID to the terminal.

Preferably, the configuring module configures the corresponding relationship information about the conventional user identity identifier and the access identifier (AID) of the terminal in an authentication center of the communication system. The processing module comprises an authentication center and an access service node (ASN), wherein the authentication center is configured to: when authenticating the terminal, after finding the corresponding AID of the conventional user identity identifier of the terminal according to the corresponding relationship information, carry the AID in an authentication signaling to send the AID to the ASN; and the ASN is configured to send the AID to the terminal.

Preferably, the communication system is implemented on the basis of a long term evolution (LTE) network, the ASN comprises a mobile management entity (MME) and a serving gateway (S-GW), and the conventional user identity identifier of the terminal refers to the international mobile subscriber identity (IMSI) of the terminal, wherein:
after finding the corresponding AID of the conventional user identity identifier of the terminal, the authentication center carries the AID in the authentication signaling to send the AID to the MME;
after receiving the authentication signaling carrying the AID, the MME parses the AID of the terminal and carries the AID in a session creation request signaling to send the AID to the S-GW, and
the MME or S-GW sends the AID to the terminal.

Preferably, the MME carries the AID in an attachment accept signaling to send the AID to the terminal; or the S-GW carries the AID in an address allocation signaling to send the AID to the terminal.

Preferably, the communication system is implemented on the basis of an evolved high rate packet data (eHRPD) network, the ASN comprises a high speed packet data serving gateway (HSGW), and the conventional user identity identifier of the terminal refers to the network access identifier (NAI) of the terminal, wherein:
the authentication center is configured to: after finding the corresponding AID of the conventional user identity identifier of the terminal, carry the AID in the authentication signaling to send the AID to the HSGW; and
the HSGW is configured to: after receiving the authentication signaling carrying the AID, parse the AID of the terminal and send the AID to the terminal.

Preferably, the HSGW carries the AID in a vendor-specific network control protocol (VSNCP) signaling or an address allocation signaling to send the AID to the terminal.

In order to implement the above solution, the present invention also proposes a terminal applied in a communication system having a network architecture with separated identifier and location and used with the above apparatus in a coordinating way, wherein:
after receiving an access identifier (AID) sent by a processing module, the terminal takes the AID as the user identity identifier used in the communication system.

In order to implement the above solution, the present invention also proposes a system composed of the apparatus and terminal in the above network side implementation solution, and the apparatus and terminal in the system are as described above, which need not be described here.

It is also proposed 2 additional methods, which can achieve configuring the AID of the terminal at the local side, and reference can be made to the following examples.

**An example for understanding the invention:**
in this application example, the access identifier (AID) of the terminal is configured in a user identity identification module of the terminal such as an SIM (Subscriber Identity Module) card. When the terminal accesses a communication system having a network architecture with separated identity identifier and location, the AID can be directly acquired from its user identity identification module to be used as the user identity identifier used in the communication system, and particular implementation procedure can be made reference to Fig. 8, including the following steps.

In step 801, the terminal initiates an operation to access the network in a specific manner and completes steps such as authentication, etc.;
in step 802, the terminal configures and stores the AID of the terminal in a smart storage module such as an SIM card, and when sending uplink data, encapsulate the data using the AID stored in the smart storage module such as the SIM card of the terminal; and
in step 803, the terminal intercommunicates data with the external network, and the data packet uses the encapsulation format of AID.

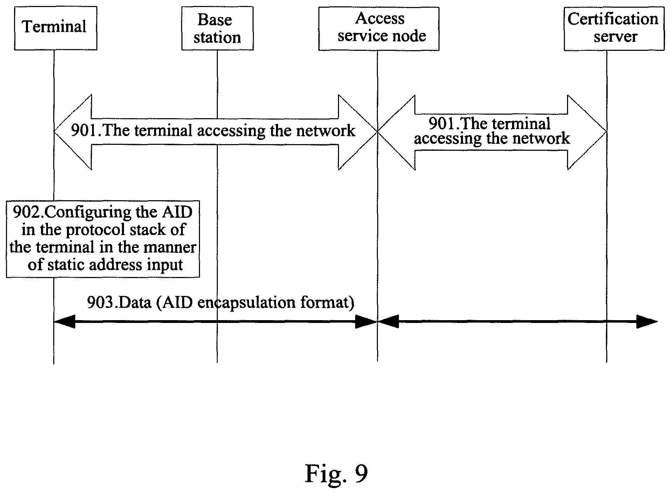

**A further example for understanding the invention:**
in this example, the AID of the terminal is configured in the protocol stack of the terminal in the manner of static address input. When the terminal accesses a communication system having a network architecture with separated identity identifier and location, the AID can be directly acquired from its user identity identification module to be used as the user identity identifier used in the communication system, and particular implementation procedure can be made reference to Fig. 9, including the following steps.

In step 901, the terminal initiates an operation to access the network in a specific manner and completes steps such as authentication, etc.;
in step 902, the terminal configures the AID in the manner of static address input and stores the AID in the protocol stack of the terminal, and when sending uplink data, the terminal encapsulates the data with this AID; and
in step 903, the terminal intercommunicates data with the external network, and the data packet uses the encapsulation format of AID.

In order to implement the above local side implementation solution, it is also proposed an apparatus for acquiring the identity identifier of a terminal applied in a communication system having a network architecture with separated identity identifier and location, comprising a configuring module, wherein:
the configuring module is configured to: configure an access identifier (AID) of the terminal in a user identity identification module of the terminal, or configure the AID of the terminal in a protocol stack of the terminal in the manner of static address input, with the AID being a unique identifier allocated to the terminal user for use in the communication system.

In order to implement the above local side implementation solution, it is also proposed a terminal applied in a communication system having a network architecture with separated identifier and location and used with the above apparatus in a coordinating way, wherein:
when accessing the communication system, the terminal takes the AID configured in a user identity identification module of the terminal or the AID configured in a protocol stack of the terminal as the user identity identifier used in the communication system.

In order to implement the above local side implementation solution, it is also proposed a system composed of the apparatus and terminal in the above local side implementation solution, and the apparatus and terminal in the system are as described above, which need not be described here.

Those skilled in the art shall understand that all of or part of the steps in the above methods can be completed by instructing relevant hardware by programs, and the programs can be stored in a computer readable storage medium, such as a read only memory, a magnetic disk, or an optical disk, etc. Optionally, all of or part of the steps of the above embodiments can also be implemented using one or more integrated circuits. Accordingly, the modules/units in the above embodiments can be implemented in the form of hardware and can also be implemented in the form of software function modules. The present invention is not limited to any particular form of combination of hardware and software.

Although the present invention is described in conjunction with specific embodiments, those skilled in the art can make modifications and changes without departing from the scope of the present invention. Such modification and change are regarded as within the scope of the present invention and the scope of the appended claims.

### Industrial Applicability

The present invention provides a method and system for acquiring terminal identifier and a terminal, so as to achieve the separation of location from identity of the terminal in the packet domain network under the premise of making the least change to the terminal or not affecting the conventional terminal.

## Claims

1. A method for acquiring a user identity identifier of a terminal, the method being applied in a communication system having a network architecture with separated identity identifier and location,
the network architecture with separated identity identifier and location comprises an access network and a backbone network, wherein an access identifier, AID, is allocated to the terminal and used in the access network, and a routing identifier, RID, is allocated to the terminal and used in the backbone network,
**characterized in that** the method comprises:
configuring (201) corresponding relationship information about a conventional user identifier and the AID of the terminal in an authentication center of the communication system, wherein the AID is the user identity identifier of the terminal and is a unique identifier allocated to a terminal user by the communication system;
when accessing the communication system, the terminal carrying (202) the conventional user identifier of the terminal in a signaling sent to the communication system;
the communication system acquiring (203) the conventional user identity identifier of the terminal from the signaling; when authenticating the terminal, after finding (303) the AID corresponding to the conventional user identity identifier of the terminal according to the corresponding relationship information, the authentication center carrying (304) the AID in an authentication signaling to send the AID to an access service node, ASN; and
the ASN sending (305) the AID to the terminal;
the terminal using the AID as a source address of a data message,
wherein the communication system is implemented based on a long term evolution, LTE, network, the ASN comprises a mobile management entity, MME, and a serving gateway, S-GW, and the conventional user identity identifier of the terminal is an international mobile subscriber identity, IMSI, of the terminal; the step of the communication system finding the AID corresponding to the conventional user identity identifier from the corresponding relationship information and returning the AID to the terminal comprises: after finding the AID corresponding to the conventional user identity identifier of the terminal, the authentication center carrying the AID in the authentication signaling to send the AID to the MME; after receiving the authentication signaling carrying the AID, the MME parsing the AID of the terminal and carrying the AID in a session creation request signaling to send the AID to the S-GW, and the MME or S-GW sending the AID to the terminal;
or
wherein the communication system is implemented based on an evolved high rate packet data, eHRPD, network, the ASN comprises a high speed packet data serving gateway, HSGW, and the conventional user identity identifier of the terminal refers to a network access identifier, NAI, of the terminal; the step of the communication system finding the AID corresponding to the conventional user identity identifier from the corresponding relationship information and returning the AID to the terminal comprises: after finding the AID corresponding to the conventional user identity identifier of the terminal, the authentication center carrying the AID in the authentication signaling to send to the HSGW; and after receiving the authentication signaling carrying the AID, the HSGW parsing the AID of the terminal and sending the AID to the terminal.

2. The method as claimed in claim 1, the communication system being implemented based on a LTE network, wherein when the MME sends the AID to the terminal, the MME carries the AID in an attachment accept signaling to send the AID to the terminal;
when the S-GW sends the AID to the terminal, the S-GW carries the AID in an address allocation signaling to send the AID to the terminal.

3. The method as claimed in claim 1 the communication system being implemented based on eHRPD network, wherein in the step of the HSGW sending the AID to the terminal, the HSGW carries the AID in a vendor-specific network control protocol, VSNCP, signaling or an address allocation signaling to send to the terminal.

4. A system for acquiring an identity identifier of a terminal, the system being applied in a communication system having a network architecture with separated identity identifier and location, comprising a configuring module, an authentication center and an access service node, ASN,
the network architecture with separated identity identifier and location comprises an access network and a backbone network, wherein an access identifier, AID, is allocated to the terminal and used in the access network as the source address of a data message, and a routing identifier, RID, is allocated to the terminal and used in the backbone network,
**characterized in that**
the configuring module is configured to configure corresponding relationship information about a conventional user identity identifier and the AID of the terminal in the authentication center of the communication system, wherein the AID is the user identifier of the terminal and is a unique identity identifier allocated to a terminal user by the communication system;
the authentication center is configured to when the terminal accesses the communication system, acquire the conventional user identity identifier of the terminal from a signaling sent by the terminal to the communication system, when authenticating the terminal, after finding the AID corresponding to the conventional user identity identifier of the terminal according to the corresponding relationship information, to carry the AID in an authentication signaling to send the AID to the ASN;
the ASN is configured to send the AID to the terminal,
wherein the communication system is implemented based on a long term evolution, LTE, network, the ASN comprises a mobile management entity, MME, and a serving gateway, S-GW, and the conventional user identity identifier of the terminal is an international mobile subscriber identity, IMSI, of the terminal, wherein the authentication center is configured to: after finding the AID corresponding to the conventional user identity identifier of the terminal, carry the AID in the authentication signaling to send to the MME; and the MME is configured to: after receiving the authentication signaling carrying the AID, parse the AID of the terminal and carry the AID in a session creation request signaling to send the AID to the S-GW; the MME or S-GW sends the AID to the terminal;
or
wherein the communication system is implemented based on an evolved high rate packet data, eHRPD, network, the ASN comprises a high speed packet data serving gateway, (HSGW, and the conventional user identity identifier of the terminal refers to a network access identifier (NAI) of the terminal, wherein the authentication center is configured to: after finding the AID corresponding to the conventional user identity identifier of the terminal, carry the AID in the authentication signaling to send the AID to the HSGW; and the HSGW is configured to: after receiving the authentication signaling carrying the AID, parse the AID of the terminal and send the AID to the terminal.

5. The system as claimed in claim 4, the communication system being implemented based on a LTE network, wherein the MME is configured to: when sending the AID to the terminal, carry the AID in an attachment accept signaling to send the AID to the terminal;
the S-GW is configured to: when sending the AID to the terminal, carry the AID in an address allocation signaling to send the AID to the terminal.

6. The system as claimed in claim 4, the communication system being implemented based on a eHRPD network, wherein the HSGW is configured to: carry the AID in a vendor-specific network control protocol, VSNCP, signaling or an address allocation signaling to send the AID to the terminal.

## Patentansprüche

1. Verfahren zum Beschaffen einer Nutzeridentitätskennung eines Endgeräts, wobei das Verfahren in einem Kommunikationssystem angewendet wird, das eine Netzwerkarchitektur mit Trennung von Identitätskennung und Aufenthaltsort aufweist,
wobei die Netzwerkarchitektur mit Trennung von Identitätskennung und Aufenthaltsort ein Zugriffsnetzwerk und ein Backbone-Netzwerk umfasst, wobei eine Zugriffskennung AID dem Endgerät zugeteilt und in dem Zugriffsnetzwerk verwendet wird und eine Routingkennung RID dem Endgerät zugeteilt und in dem Backbone-Netzwerk verwendet wird,
**dadurch gekennzeichnet, dass** das Verfahren umfasst, dass:
entsprechende Beziehungsinformationen über eine herkömmliche Nutzerkennung und die AID des Endgeräts in einer Authentifizierungszentrale des Kommunikationssystems konfiguriert werden (201), wobei die AID die Nutzeridentitätskennung des Endgeräts ist und eine eindeutige Kennung ist, die einem Endgerätenutzer von dem Kommunikationssystem zugeteilt wird;
wenn auf das Kommunikationssystem zugegriffen wird, das Endgerät die herkömmliche Nutzerkennung des Endgeräts in einem Signal trägt (202), das an das Kommunikationssystem gesendet wird;
das Kommunikationssystem die herkömmliche Nutzeridentitätskennung des Endgeräts aus dem Signal beschafft (203); die Authentifizierungszentrale, wenn sie das Endgerät authentifiziert, nachdem sie die AID gefunden hat (303), die der herkömmlichen Nutzeridentitätskennung des Endgeräts in Übereinstimmung mit den entsprechenden Beziehungsinformationen entspricht, die AID in einem Authentifizierungssignal trägt (304), um die AID an einen Zugriffsdienstknoten ASN zu senden; und
der ASN die AID an das Endgerät sendet (305);
das Endgerät die AID als eine Quellenadresse einer Datenbotschaft verwendet,
wobei das Kommunikationssystem auf der Grundlage eines Long Term Evolution Netzwerks, LTE Netzwerks, implementiert wird, der ASN eine mobile Managemententität MME und ein Serving Gateway, S-GW, umfasst und die herkömmliche Nutzeridentitätskennung des Endgeräts eine International Mobile Subscriber Identity, IMSI, des Endgeräts ist; wobei der Schritt, dass das Kommunikationssystem die AID, die der herkömmlichen Nutzeridentitätskennung entspricht, in den entsprechenden Beziehungsinformationen findet, und die AID an das Endgerät zurückgibt, umfasst, dass: nach dem Finden der AID, die der herkömmlichen Nutzeridentitätskennung des Endgeräts entspricht, die Authentifizierungszentrale die AID in dem Authentifizierungssignal trägt, um die AID an die MME zu senden; wobei die MME nach dem Empfangen des Authentifizsierungssignals, welches die AID trägt, die AID des Endgeräts analysiert und die AID in einem Sitzungserzeugungsanfragesignal trägt, um die AID an das S-GW zu senden, und die MME oder das S-GW die AID an das Endgerät sendet;
oder
wobei das Kommunikationssystem auf der Grundlage eines Evolved High Rate Packet Data Netzwerks, eHRPD-Netzwerks, implementiert wird, der ASN ein High Speed Packet Data Serving Gateway, HSGW, umfasst, und die herkömmliche Nutzeridentitätskennung des Endgeräts eine Netzwerkzugriffskennung NAI des Endgeräts bezeichnet; wobei der Schritt, dass das Kommunikationssystem die AID, die der herkömmlichen Nutzeridentitätskennung entspricht, in den entsprechenden Beziehungsinformationen findet und die AID an das Endgerät zurückgibt, umfasst, dass: nachdem die AID gefunden wurde, die der herkömmlichen Nutzeridentitätskennung des Endgeräts entspricht, die Authentifizierungszentrale die AID in dem Authentifizierungssignal trägt, um es an das HSGW zu senden; und dass das HSGW nach Empfang des Authentifizierungssignals, welches die AID trägt, die AID des Endgeräts analysiert und die AID an das Endgerät sendet.

2. Verfahren nach Anspruch 1, wobei das Kommunikationssystem auf der Grundlage eines LTE-Netzwerks implementiert wird, wobei
wenn die MME die AID an das Endgerät sendet, die MME die AID in einem Attachment Accept Signal trägt, um die AID an das Endgerät zu senden;
wenn das S-GW die AID an das Endgerät sendet, das S-GW die AID in einem Adressenzuteilungssignal trägt, um die AID an das Endgerät zu senden.

3. Verfahren nach Anspruch 1, wobei das Kommunikationssystem auf der Grundlage eines eHRPD-Netzwerks implementiert wird, wobei
in dem Schritt, dass das HSGW die AID an das Endgerät sendet, das HSGW die AID in einem herstellerspezifischen Netzwerksteuerungsprotokoll-Signal VSNCP-Signal oder einem Adressenzuteilungssignal trägt, um sie an das Endgerät zu senden.

4. System zum Beschaffen einer Identitätskennung eines Endgeräts, wobei das System in einem Kommunikationssystem angewendet wird, das eine Netzwerkarchitektur mit Trennung von Identitätskennung und Aufenthaltsort aufweist, umfassend ein Konfigurationsmodul, eine Authentifizierungszentrale und einen Zugriffsdienstknoten ASN,
wobei die Netzwerkarchitektur mit Trennung von Identitätskennung und Aufenthaltsort ein Zugriffsnetzwerk und ein Backbone-Netzwerk umfasst, wobei eine Zugriffskennung AID dem Endgerät zugeteilt ist und in dem Zugriffsnetzwerk als die Quellenadresse einer Datenbotschaft verwendet wird, und eine Routingkennung RID dem Endgerät zugeteilt ist und in dem Backbone-Netzwerk verwendet wird,
**dadurch gekennzeichnet, dass**
das Konfigurationsmodul ausgestaltet ist, um entsprechende Beziehungsinformationen über eine herkömmliche Nutzeridentitätskennung und die AID des Endgeräts in der Authentifizierungszentrale des Kommunikationssystems zu konfigurieren, wobei die AID die Nutzerkennung des Endgeräts ist und eine eindeutige Identitätskennung ist, die einem Endgerätenutzer durch das Kommunikationssystem zugeteilt ist;
die Authentifizierungszentrale ausgestaltet ist, um dann, wenn das Endgerät auf das Kommunikationssystem zugreift, die herkömmliche Nutzeridentitätskennung des Endgeräts aus einem Signal zu beschaffen, das von dem Endgerät an das Kommunikationssystem gesendet wird, wenn das Endgerät authentifiziert wird, nachdem die AID, die der herkömmlichen Nutzeridentitätskennung des Endgeräts entspricht, in Übereinstimmung mit den entsprechenden Beziehungsinformationen gefunden wurde, um die AID in einem Authentifizierungssignal zu tragen, um die AID an den ASN zu senden;
der ASN ausgestaltet ist, um die AID an das Endgerät zu senden, wobei das Kommunikationssystem auf der Grundlage eines Long Term Evolution Netzwerks, LTE-Netzwerks implementiert ist, der ASN eine mobile Managemententität MME und ein Serving Gateway S-GW umfasst und die herkömmliche Nutzeridentitätskennung des Endgeräts eine International Mobile Subscriber Identity IMSI des Endgeräts ist, wobei die Authentifizierungszentrale ausgestaltet ist, um: nachdem die AID, die der herkömmlichen Nutzeridentitätskennung des Endgeräts entspricht, gefunden wurde, die AID in dem Authentifizierungssignal zum Senden an die MME trägt; und die MME ausgestaltet ist, um: nach Empfangen des Authentifizierungssignals, welches die AID trägt, die AID des Endgeräts zu analysieren und die AID in einem Sitzungserzeugungsanfragesignal zu tragen, um die AID an das S-GW zu senden; wobei die MME oder das S-GW die AID an das Endgerät sendet;
oder
wobei das Kommunikationssystem auf der Grundlage eines Evolved High Rate Packet Data Netzwerks, e-HRPD-Netzwerks, implementiert ist, der ASN ein dienendes High Speed Packet Data Serving Gateway (HSGW) umfasst und die herkömmliche Nutzeridentitätskennung des Endgeräts eine Netzwerkzugriffskennung (NAI) des Endgeräts bezeichnet, wobei die Authentifizierungszentrale ausgestaltet ist, um: nachdem die AID gefunden wurde, die der herkömmlichen Nutzeridentitätskennung des Endgeräts entspricht, die AID in dem Authentifizierungssignal zu tragen, um die AID an das HSGW zu senden; und das HSGW ausgestaltet ist, um: nach Empfangen des Authentifizierungssignals, welches die AID trägt, die AID des Endgeräts zu analysieren, und die AID an das Endgerät zu senden.

5. System nach Anspruch 4, wobei das Kommunikationssystem auf der Grundlage eines LTE-Netzwerks implementiert ist, wobei
die MME ausgestaltet ist, um: wenn die AID an das Endgerät gesendet wird, die AID in einem Attachment Accept Signal zu tragen, um die AID an das Endgerät zu senden;
das S-GW ausgestaltet ist, um, wenn die AID an das Endgerät gesendet wird, die AID in einem Adresszuteilungssignal zu tragen, um die AID an das Endgerät zu senden.

6. System nach Anspruch 4, wobei das Kommunikationssystem auf der Grundlage eines eHRPD-Netzwerks implementiert ist, wobei
das HSGW ausgestaltet ist, um: die AID in einem herstellungsspezifischen Netzwerksteuerungsprotokoll-Signal VSNCP-Signal oder einem Adressenzuteilungssignal zu tragen, um die AID an das Endgerät zu senden.

## Revendications

1. Procédé d'acquisition d'un identifiant d'identité d'utilisateur d'un terminal, le procédé étant appliqué dans un système de communication ayant une architecture de réseau avec identifiant et localisation d'identité séparés, l'architecture de réseau avec identifiant et localisation d'identité séparés comprenant un réseau d'accès et un réseau dorsal, un identifiant d'accès, AID, étant attribué au terminal et utilisé dans le réseau d'accès et un identifiant de routage, RID, étant attribué au terminal et utilisé dans le réseau dorsal,
**caractérisé en ce que** le procédé comprend les étapes suivantes :
configurer (201) des informations de relation correspondantes concernant un identifiant d'utilisateur classique et l'AID du terminal dans un centre d'authentification du système de communication, dans lequel l'AID est l'identifiant d'identité d'utilisateur du terminal et est un identifiant unique attribué à un utilisateur du terminal par le système de communication ;
lorsqu'il accède au système de communication, le terminal transporte (202) l'identifiant d'utilisateur classique du terminal dans une signalisation envoyée au système de communication ;
le système de communication acquiert (203) l'identifiant d'identité d'utilisateur classique du terminal à partir de la signalisation ; lorsqu'il authentifie le terminal, après avoir trouvé (303) l'AID correspondant à l'identifiant d'identité d'utilisateur classique du terminal en accord avec les informations de relation correspondantes, le centre d'authentification transporte (304) l'AID dans une signalisation d'authentification pour envoyer l'AID à un noeud de service d'accès, ASN ; et
l'ASN envoie (305) l'AID au terminal ;
le terminal utilise l'AID comme adresse source d'un message de données,
dans lequel le système de communication est mis en oeuvre sur la base d'un réseau à évolution à long terme, LTE, l'ASN comprend une entité de gestion mobile, MME, et une passerelle de desserte, S-GW, et l'identifiant d'identité d'utilisateur classique du terminal est une identité internationale d'abonné mobile, IMSI du terminal ; l'étape à laquelle le système de communication trouve l'AID correspondant à l'identifiant d'identité d'utilisateur classique à partir des informations de relation correspondantes et retourne l'AID au terminal comprend : après avoir trouvé l'AID correspondant à l'identifiant d'identité d'utilisateur classique du terminal, le centre d'authentification transporte l'AID dans la signalisation d'authentification pour envoyer l'AID à la MME ; après avoir reçu la signalisation d'authentification transportant l'AID, la MME analyse l'AID du terminal et transporte l'AID dans une signalisation de demande de création de session pour envoyer l'AID à la S-GW, et la MME ou la S-GW envoie l'AID au terminal ;
ou
dans lequel le système de communication est mis en oeuvre sur la base d'un réseau de données par paquets à haut débit évolué, eHRPD, l'ASN comprend une passerelle de desserte de données par paquets à grande vitesse, HSGW, et l'identifiant d'identité d'utilisateur classique du terminal se réfère à un identifiant d'accès au réseau, NAI, du terminal ; l'étape à laquelle le système de communication trouve l'AID correspondant à l'identifiant d'identité d'utilisateur classique à partir des informations de relation correspondantes et retourne l'AID au terminal comprend : après avoir trouvé l'AID correspondant à l'identifiant d'identité d'utilisateur classique du terminal, le centre d'authentification transporte l'AID dans la signalisation d'authentification à envoyer à la HSGW ; et après avoir reçu la signalisation d'authentification transportant l'AID, la HSGW analyse l'AID du terminal et envoie l'AID au terminal.

2. Procédé selon la revendication 1, le système de communication étant mis en oeuvre sur la base d'un réseau LTE, dans lequel
lorsque la MME envoie l'AID au terminal, la MME transporte l'AID dans une signalisation d'acceptation d'attachement pour envoyer l'AID au terminal ;
lorsque la S-GW envoie l'AID au terminal, la S-GW transporte l'AID dans une signalisation d'attribution d'adresse pour envoyer l'AID au terminal.

3. Procédé selon la revendication 1, le système de communication étant mis en oeuvre sur la base d'un réseau eHRPD, dans lequel
à l'étape où la HSGW envoie l'AID au terminal, la HSGW transporte l'AID dans une signalisation de protocole de commande de réseau spécifique au fournisseur, VSNCP, ou une signalisation d'attribution d'adresse à envoyer au terminal.

4. Système pour acquérir un identifiant d'identité d'un terminal, le système étant appliqué dans un système de communication ayant une architecture de réseau avec identifiant et localisation d'identité séparés, comprenant un module de configuration, un centre d'authentification et un noeud de service d'accès, ASN,
l'architecture de réseau avec identifiant et localisation d'identité séparés comprenant un réseau d'accès et un réseau dorsal, un identifiant d'accès, AID, étant attribué au terminal et utilisé dans le réseau d'accès comme adresse source d'un message de données et un identifiant de routage, RID, étant attribué au terminal et utilisé dans le réseau dorsal,
**caractérisé en ce que**
le module de configuration est configuré pour configurer des informations de relation correspondantes concernant un identifiant d'identité d'utilisateur classique et l'AID du terminal dans le centre d'authentification du système de communication, l'AID étant l'identifiant d'utilisateur du terminal et étant un identifiant d'identité unique attribué à un utilisateur du terminal par le système de communication ;
le centre d'authentification est configuré pour, lorsque le terminal accède au système de communication, acquérir l'identifiant d'identité d'utilisateur classique du terminal à partir d'une signalisation envoyée par le terminal au système de communication, après avoir trouvé l'AID correspondant à l'identifiant d'identité d'utilisateur classique du terminal à partir des informations de relation correspondantes, transporter l'AID dans une signalisation d'authentification pour envoyer l'AID à l'ASN ;
l'ASN est configuré pour envoyer l'AID au terminal,
dans lequel le système de communication est mis en oeuvre sur la base d'un réseau à évolution à long terme, LTE, l'ASN comprend une entité de gestion mobile, MME, et une passerelle de desserte, S-GW, et l'identifiant d'identité d'utilisateur classique du terminal est une identité internationale d'abonné mobile, IMSI, du terminal ; le centre d'authentification étant configuré pour : après avoir trouvé l'AID correspondant à l'identifiant d'identité d'utilisateur classique du terminal, transporter l'AID dans la signalisation d'authentification à envoyer à la MME ; et la MME est configurée pour : après avoir reçu la signalisation d'authentification transportant l'AID, analyser l'AID du terminal et transporter l'AID dans une signalisation de demande de création de session pour envoyer l'AID à la S-GW : la MME ou la S-GW envoie l'AID au terminal ;
ou
dans lequel le système de communication est mis en oeuvre sur la base d'un réseau de données par paquets à haut débit évolué, eHRPD, l'ASN comprend une passerelle de desserte de données par paquets à grande vitesse, HSGW, et l'identifiant d'identité d'utilisateur classique du terminal se réfère à un identifiant d'accès au réseau, NAI, du terminal ; le centre d'authentification étant configuré pour : après avoir trouvé l'AID correspondant à l'identifiant d'identité d'utilisateur classique du terminal, transporter l'AID dans la signalisation d'authentification pour envoyer l'AID à la HSGW ; et la HSGW est configurée pour : après avoir reçu la signalisation d'authentification transportant l'AID, analyser l'AID du terminal et envoyer l'AID au terminal.

5. Système selon la revendication 4, le système de communication étant mis en oeuvre sur la base d'un réseau LTE, dans lequel
la MME est configurée pour : lorsqu'elle envoie l'AID au terminal, transporter l'AID dans une signalisation d'acceptation d'attachement pour envoyer l'AID au terminal ;
la S-GW est configurée pour : lorsqu'elle envoie l'AID au terminal, transporter l'AID dans une signalisation d'attribution d'adresse pour envoyer l'AID au terminal.

6. Système selon la revendication 4, le système de communication étant mis en oeuvre sur la base d'un réseau eHRPD, dans lequel
la HSGW est configurée pour : transporter l'AID dans une signalisation de protocole de commande de réseau spécifique au fournisseur, VSNCP, ou une signalisation d'attribution d'adresse pour envoyer l'AID au terminal.
